# EUROPEAN PATENT SPECIFICATION

(11) **EP 2 192 062 B1**
(45) Date of publication and mention of the grant of the patent: **25.04.2012**
(21) Application number: 09177338.2
(22) Date of filing: 27.11.2009
(51) Int. Cl.: B65G 47/91

(54) **A pick-up head provided with pick-up devices arranged side-by-side and at variable pitch**
Aufnahmekopf mit nebeneinander und in verstellbarem Abstand angeordneten Aufnahmevorrichtungen
Tête de préhension fournie avec des dispositifs de capteur agencés côte-à-côte et à un espacement variable

(30) Priority: 28.11.2008 IT TO20080885
(43) Date of publication of application: 02.06.2010
(73) Proprietor: OPM S.p.A., 12066 Monticello d'Alba (IT)
(72) Inventor: Giacobbe, Fulvio, 12050 Guarene (IT); Gasverde, PierAngelo, 12042 Bra (IT)
(74) Representative: Jorio, Paolo

(56) References cited:
- US-A- 6 068 317
- US-B1- 6 352 402

## Description

The present invention relates to a pick-up head provided with pick-up devices arranged side-by-side and at variable pitch, according to the preamble of the appended claim 1.

Transfer machines are known to transfer products from a picking station to a storing station, comprising a robot and a pick-up head, which is moved by the robot between the two stations, and comprises a series of pick-up devices arranged side-by-side and activated to grip, hold and release the respective products. In the picking station, the products to be transferred are arranged in a row at a constant, predetermined distance, while the storing station normally has a series of containers in which the products have to be packaged at a different distance from that of the picking station.

The pick-up head comprises a horizontal rail, on which the pick-up devices are slidingly coupled. The pitch between the pick-up devices along the rail is reduced when transferring from the picking station to the storing station, so as to place the products at the distance required by the storing station.

In order to move the pick-up devices towards and away from each other along the rail, solutions are known in which the pick-up head comprises a flat plate defining a series of cams or tracks, which are engaged by follower elements held by the pick-up devices, respectively. The pick-up head further comprises an actuator, which moves the plate in a direction orthogonal to the rail, synchronously with the movement of the robot, to make the follower elements slide along the cams and therefore move the pick-up devices along the rail at predetermined speeds and to predetermined positions.

The above-described known solutions are not satisfactory because the centre of gravity of the pick-up head moves due to the movement of the plate, with consequent undesired vibrations which are transferred to the robot and with consequent inaccuracies in controlling the position of the pick-up head.

Furthermore, the plate with the cams is slidingly mounted on guides, without the possibility of varying the profile of the cams and without the possibility of varying the number of pick-up devices, because disassembling the components for obtaining these variations could compromise the accuracy for assembling the plate on the guides and thus the accuracy for sliding and positioning the plate itself. Therefore, in general, with such a known solution the profile of the cams may not be simply and quickly configured to adapt the pick-up head to various product lines.

US6068317A discloses a device according to the preamble of claim 1. The device includes an elevating plate movable in up and down direction along a vertical guider, and a cam shaft rotatably mounted on the elevating plate. The cam shaft has a plurality of cam grooves formed in a radial direction in an outer circumferential surface, and is rotated by a driving mechanism. A plurality of pick-up members are movable in a horizontal direction along a horizontal guider and have respective top ends inserted in the cam grooves.

It is the object of the present invention to implement a pick-up head provided with pick-up devices arranged side-by-side at variable pitch, which allows to simply and cost-effectively solve the aforesaid problems.

According to the present invention, there is provided a pick-up head as defined in claim 1.

The invention will now be described with reference to the accompanying drawings which illustrate a non-limitative embodiment thereof, in which:
- figure 1 is a rear perspective view, with parts exploded, of a preferred embodiment of the pick-up head provided with pick-up devices arranged side-by-side and at variable pitch according to the present invention;
- figures 2 and 3 show two details in figure 1 on an enlarged scale;
- figure 4 is a perspective view from the bottom, with parts exploded, of the detail in figure 2; and
- figure 5 is a side view of the pick-up head in figure 1.

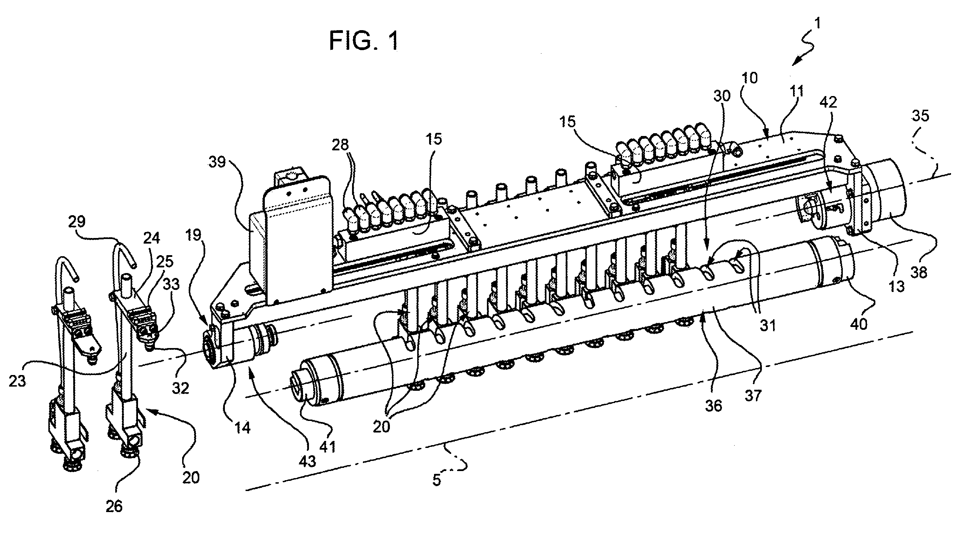

In figure 1, numeral 1 indicates as a whole a pick-up head (partially illustrated), which is moved by a robot (not shown) for transferring products from a picking station to a storing station. The products to be transferred are arranged in the picking station in a row along a horizontal direction 5, in fixed positions and at a predetermined, constant reciprocal distance. The storing station, instead, houses a series of containers in which the products have to be packaged.

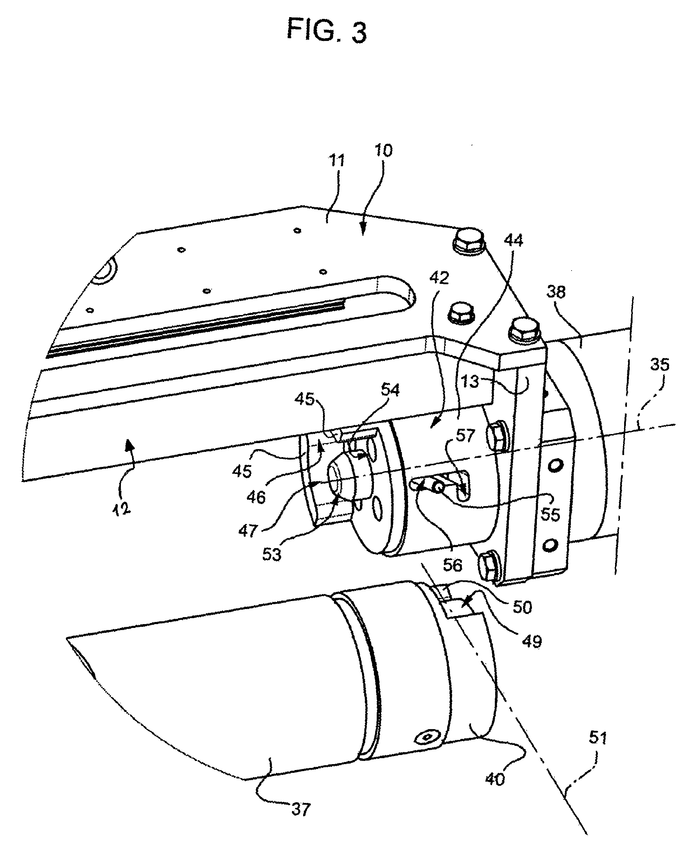

The pick-up head 1 comprises a support structure 10, which is fixed to the end of an arm of the robot in manner not shown and not described in detail. Structure 10 comprises: an upper horizontal plate 11 elongated parallelly to direction 5 and reinforced by a lower fin 12 (figure 3); and two vertical flanges 13,14 fixed to the opposite axial ends of plate 11.

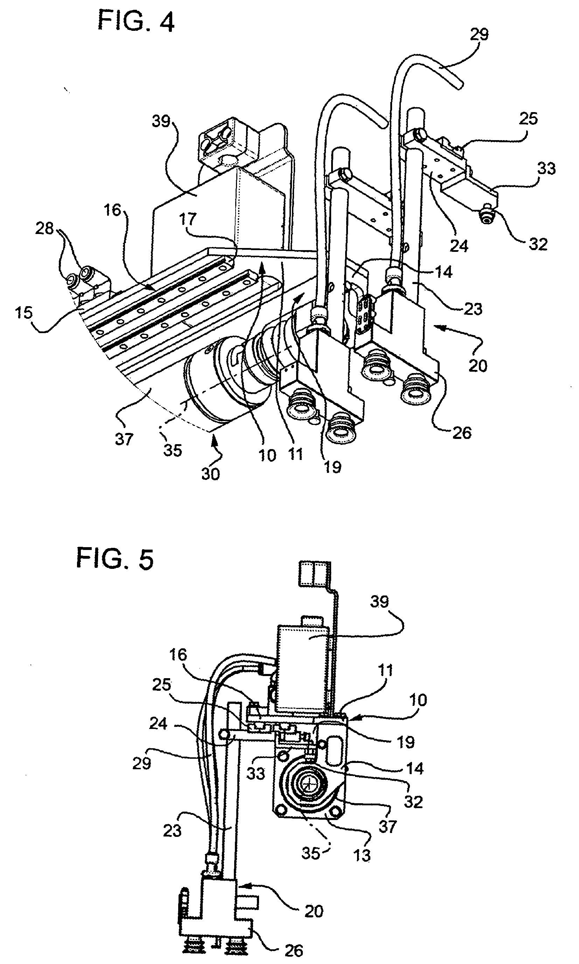

Plate 11 holds two pneumatic distributors 15 and a guide 16 (figure 4), which are arranged in fixed positions on the upper and lower faces of plate 11, respectively.

With reference to figures 4 and 5, guide 16 is horizontal and straight and extends parallelly to direction 5; and flange 14 is shaped so as to define a recess 19 in front of one end 17 of the guide 16, so as to leave the end 17 open, to be able to insert/remove the pick-up devices 20 on the guide 16.

The pick-up devices 20 are equal in number to the products to be picked up each time, are also named "fingers", and comprise respective vertical rods 23 and respective supporting blocks 24. The blocks 24 are fastened to the upper ends of the rods 23 and hold respective slide shoes 25, which are arranged in fixed positions on the upper face of the blocks 24 and are slidingly coupled to the guide 16.

The pick-up devices 20 further comprise respective pick-up devices 26, which are coupled in fixed positions to the lower ends of the rods 23 and may be activated to grip, hold and release the respective products. In particular, the pick-up devices 26 are defined by suction systems, e.g. by pairs of suction caps which in use come in contact with the upper face of the products. Alternatively, the pick-up devices may be defined by a different suction system or by electrically or pneumatically operated grippers. In the particular example shown in figure 4, the suction caps 26 are connected to connectors 28 of the distributors 15 by means of respective flexible tubes 29. In turn, the distributors 15 connect the suction caps 26 to a pneumatic system (not shown) for generating vacuum so as to allow to create a vacuum in the area underneath the suction caps 26 when the products need to be picked up. The products are released in the storing station by controlling respective solenoid valves of the distributors 15 so as to make such a vacuum cease or so as to generate a minor pneumatic pressure between the suction caps 26 and the upper face of the products.

As shown in figures from 1 to 3, the pick-up head 1 comprises a moving assembly 30 for moving the pick-up devices 20 along the guide 16 between an enlarged configuration, in which the pick-up devices 26 are arranged at a pitch equal to the distance between the products to be picked up from the picking station, and a compacted configuration in which the pick-up devices 26 are divided into two groups and arranged at a pitch equal to the distance required by the places provided in the containers of the storing station.

For each pick-up device 20, the moving assembly 30 comprises a respective cam 31 and a respective follower element 32. The follower elements 32 (figures 1 and 4) are defined by rollers, which idly rotate about respective vertical axes and are overhangingly held at the bottom by respective horizontal plates 33. The plates 33 are, in turn, fixed to the blocks 24 on the opposite side with respect to the rods 23. According to the invention, the cams 31 are instead held in fixed positions by a shaft or drum 37, which extends along an axis 35 parallel to direction 5 and is coupled to the flanges 13,14 so as to be able to rotate about the axis 35, as will be described in greater detail below. In particular, drum 37 is arranged underneath the plates 33 and behind the rods 23, and is obtained from a cylinder of full material or a tube. The cams 31 are defined by grooves or slots which are cut into the outer cylindrical surface 36 of the drum 37 and are each engaged by a respective follower element 32.

With reference to figure 1, the moving assembly 30 further comprises an actuator 38 which rotates the drum 37. The actuator 38 is preferably defined by a rotary electric motor, held by the flange 13 in a fixed position which is coaxial with the drum 37 along axis 35, outside the structure 10.

The power supply reaches the motor 38 from an electric power supply and control unit 39 which is arranged in a fixed position of the upper face of the plate 11. Unit 39 transmits the controls emitted by a control unit of the robot (not shown) to the solenoid valves of distributors 15. In order to synchronize the operation of the pick-up devices 26, the movements of the robot and the rotation of cams 31, the drum 37 or motor 38 is provided with an encoder or other angular positioning sensor, which sends a signal indicating the rotation angle to the unit 39, which transmits it to the aforesaid control unit or directly to the control unit.

By virtue of the profile of cams 31, the rotation of the drum 37 causes an axial movement of the follower elements 32 along the surface 36 and thus a sliding of the pick-up devices 20 along the guide 16 between the compacted and enlarged configurations, at predetermined speeds. The cams 31 may be of the closed loop type, i.e. continuous over 360°, in order to rotate the drum 37 in a single rotation direction; or may extend only by a predetermined angle with two ends which are not joined together. In the latter case, motor 38 reverses the rotation direction to take the pick-up devices 20 from the compacted configuration to the enlarged configuration and vice versa.

The axial ends of drum 37 are indicated by reference numbers 40 and 41 and are coupled to the flanges 13,14 by means of respective quick coupling devices 42,43 which make the drum 37 replaceable.

With reference to figure 3, device 42 comprises a supporting body 44 which protrudes from the flange 13 along axis 35 from the opposite side of the motor 38 and is coupled to the flange 13 by means of bearings (not shown) so as to be able to rotate about the axis 35 under the bias of the motor 38. Body 44 axially ends with two teeth 45, which are circular-sector shaped, transmit rotation torques to the drum 37, are arranged on a same half of the body 44, and in such half are circumferentially separated by a slit 46.

Slit 46 forms part a housing 47, which mates with the end 40 and is engaged by the end 40. In other words, the end 40 has two recesses 49, which are complementary and engaged by the teeth 45. The recesses 49 are circumferentially separated by an appendix 50, which extends along a radial direction 51 and engages the slit 46.

Device 42 further comprises a retaining nose-cone or pin 53, which slides in a cylindrical axial hole 54 of the body 44 between an extracted position and a retracted position. In the extracted position, the nose-cone 53 protrudes into the housing 47 and engages an axial seat of the end 40 (not shown in the accompanying figures); in the retracted position (not shown), it is released from such an axial seat to leave the end 40 free to slide along the direction 51 in a direction opposite to the teeth 45. The axial movement of the nose-cone 53 is obtained by manually acting on a lever 55, which is fixed with respect to the nose-cone 53, slides in a side slit of the body 44 and axially protrudes from the body 44. The slit is L-shaped so as to have an axial guiding segment 56 which corresponds to the sliding of the nose-cone 53 between the retracted and extracted positions, and a circumferential retaining segment 57 which keeps the lever 55, and thus the nose-cone 53, in a retracted position. When the nose-cone 53 is not blocked in the retracted position, it is kept in the extracted position by a spring (not shown) arranged in the hole 54 behind the nose-cone 53 itself.

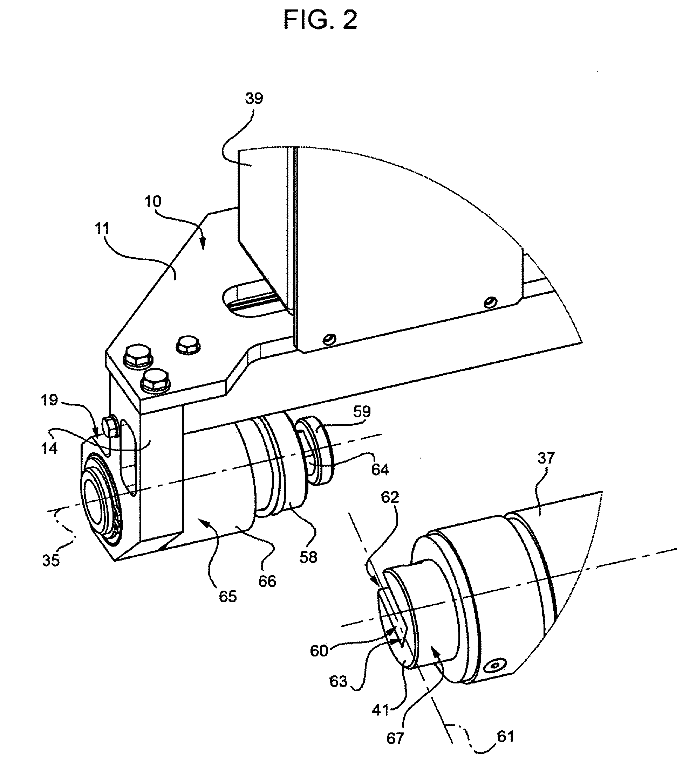

With reference to figure 2, device 43 comprises a supporting body 58, which protrudes from the flange 14 along the axis 35 towards the body 44, and is coupled to the flange 14 by means of bearings (not shown) so as to be able to idly rotate about the axis 35, and axially ends with a mushroom-shaped head 59. The head 59 engages a seat 60, which extends into the end 41 along a radial direction 61 parallel to the direction 51 from a side opening 62 to a bottom surface 63. The seat 60, sectioned with section plans orthogonal to direction 61, has a transversal T-shaped section complementary to the shape of the head 59, whereby it is axially open for a leg portion 64 of the head 59 to pass.

Device 43 comprises a cylindrical sleeve 65, which is fitted on the body 58 in an axially sliding manner between an advanced position and a retracted position. In the advanced position (not shown), an end portion 66 of the sleeve 65 is fitted on a cylindrical outer surface 67 of the end 41, so as to keep head 59 at the bottom of the seat 60 against the surface 63 and keep the end 41 coaxial to the body 58; in the retracted position, the end portion 66 is axially spaced from the end 41 to be able to remove the end 41 along the direction 61, thus making the head 59 slide along the seat 60 to the opening 62.

In order to remove the drum 37, first the robot is activated to place the pick-up head 1 in a comfortable position, adapted for the disassembly operations. Then, manually keeping the drum 37 still, the lever 55 is moved into its slit, firstly outwards in the segment 56 and then downwards in the segment 57 (figure 3), so as to free the end 40 of the nose-cone 53. Sleeve 65 is then retracted (leftwards in figure 2); keeping the sleeve 65 in the retracted position against the axial bias of a spring (not shown) arranged between sleeve 65 and body 58, the drum 37 may be extracted parallelly to the directions 51,61, under the guidance of head 59 in the seat 60.

Once drum 37 has been removed, the number of pick-up devices 20 may be changed, by inserting/removing pick-up devices 20 on the guide 16. Blocks 24, plates 33 and slide shoes 25 and the follower elements 32 pass through the opening defined by the recess 19, without interfering with the flange 14. The sleeve 65 also does not obstruct the passage of the follower elements 32 in a direction parallel to the guide 16, because the outer radial dimension of sleeve 65, and thus of device 43, is smaller than the radial distance of the follower elements 32 from axis 35.

In order to refit a new drum 37, e.g. with cams having a different profile, the operations are carried out in the reverse order, keeping the pick-up devices 20 in predetermined reference positions, such as to allow the follower elements 32 to enter into the respective cams 31 when the new drum 37 is inserted on the bodies 44 and 58 parallelly to the directions 51,61. For example, these reference positions may be determined by a removable template (not shown).

From the above, it is apparent that the moving assembly 30 allows to limit the vibrations and increase the accuracy of controlling the position of the pick-up head 1 during the movement made by the robot, because the pick-up devices 20 are moved by keeping the centre of gravity of the pick-up head 1 substantially unchanged, by virtue of the arrangement and rotation of the cams 31 about axis 35. Furthermore, the profile of the cams 31 and the number of pick-up devices 20 may be configured in a highly simple manner by replacing the drum 37 and inserting/removing the pick-up devices 20 on the guide 16, respectively, so as to quickly adapt the pick-up head 1 to different packaging lines.

The devices 42 and 43 are small and allow to manually remove the drum 37 in a direction orthogonal to axis 35, i.e. without removing the other components from the pick-up head 1. In order to assemble and disassemble the drum 37, the devices 42 and 43 does not require to respect particular contrivances or tolerances, which would instead be needed to ensure sliding parallelism in the traditional solutions which include a reciprocally moved, flat plate.

By virtue of the above-described solution, cams with profiles which provide particular movements to the pick up devices 20 may be provided. For example, the possibility of making cams with profiles which add a degree of freedom could be included, thus making the pick-up devices 20 swing about a guide 16 defined by a rail having a circular transversal section.

Finally, from the above, it is apparent that changes and variations may be made to the described pick-up head 1 without departing from the scope of protection of the present invention, as defined in the appended claims.

In particular, actuator 38 could be replaced by another type of drive which may rotate the cams 31, e.g. by a pneumatic rotary motor or an assembly of a linear actuator and a transmission which converts the reciprocating motion into rotary motion; and/or the pick-up devices 26 could be connected to the slide shoes 25 in a different manner from that described; and/or the structure 10 could be different in shape as compared to that shown by way of example. In particular, the opening defined by recess 19 could be closed by a movable cover and/or could be different in shape as compared to that shown, or could be open by moving the flange 14.

Furthermore, nose-cone 53 and sleeve 65 could be replaced by different retaining elements; and/or they could be held by the ends 40,41 instead of the bodies 44,58, if the weight of drum 37 is not excessive.

Finally, the operations of replacing the drum 37 could be automated, e.g. also with the aid of a loader including a series of drums already arranged with different cams which may be selected according to the packaging line requirements.

## Claims

1. Pick-up head (1) comprising:
- a support structure (10);
- a horizontal guide (16) held in a fixed position by said support structure (10);
- a plurality of pick-up devices (26) operable to grip and release respective products (4), arranged side-by-side and coupled in a sliding way to said horizontal guide (16);
- moving means (30) for moving said pick-up devices (26) along said horizontal guide (16) between a compacted configuration and an enlarged configuration, in which said pick-up devices (26) are positioned at different pitches; said moving means (30) comprising:
o for each said pick-up device, a respective cam (31) and a respective follower element (32); the cams (31) being held by said support structure (10), and the follower elements (32) being coupled respectively to said pick-up devices (26) ;
o at least one actuator for shifting the cams;
- a shaft or drum (37), which holds said cams (31), extends along an axis (35) parallel to said horizontal guide (16), and is activated by said actuator (38) to rotate about said axis (35); and
- attachment means (42,43) which connect said shaft or drum (37) to said support structure (10) in a removable way;
**characterized in that** said attachment means (42,43) comprise two support bodies (44,58), which are coupled in a rotating manner to said support structure (10) about said axis (35); the axial ends (40,41) of said shaft or drum (37) being fixed to said support bodies (44,58) in a removable way.

2. Pick-up head according to claim 1, **characterized in that** said shaft or drum (37) is removable and fittable with respect to said support bodies (44,58) in a direction orthogonal to said axis (35).

3. Pick-up head according to claim 2, **characterized in that** said attachment means (42,43) comprise two retaining elements (53,65), which are axially movable between two positions to block and, respectively, release said axial ends (40,41).

4. Pick-up head according to claim 3, **characterized in that** one of said retaining elements (53) is defined by a pin, which is axially slidable in an axial hole (54) made in one of either the support body or the end of said shaft or drum (37).

5. Pick-up head according to claim 3, **characterized in that** one of said retaining elements (65) is defined by an external sleeve held by either one of the support body or the end of said drum.

6. Pick-up head according to any one of the preceding claims, **characterized in that** said support structure (10) has a side opening (19), to remove/insert said pick-up devices (26) on said guide (16).

7. Pick-up head according to claim 6, **characterized in that** said support structure (10) comprises a first and a second vertical flange (13; 14) arranged on opposite axial sides of said shaft or drum (37); the first flange (13) being associated with the motion input of said actuator (38), and the second flange (14) defining said side opening (19).

8. Pick-up head according to claim 7, **characterized in that** said attachment means (42,43) comprise an attaching device (43) connected to said second flange (14) and having an external radial dimension smaller than the radial distance of said follower elements (32) from said axis (35).

9. Pick-up head according to any one of the preceding claims, **characterized in that** said pick-up devices (26) are connected to the follower elements (32) by respective vertical rods (23) located in front of said cams (31); said follower elements (32) being defined by idle rollers rotating about respective vertical axes and being held overhanging at the bottom by respective plates (33), which are located above said cams (31) and are fixed with respect to respective said rods (23).

## Patentansprüche

1. Aufnahmekopf (1), der folgendes aufweist:
- eine Tragstruktur (10);
- eine horizontale Führung (16), die in einer fixierten Position durch die Tragstruktur (10) gehalten wird;
- eine Vielzahl von Aufnahmevorrichtungen (26), die betätigbar sind zum Greifen und Lösen jeweiliger Produkte (4), die Seite an Seite angeordnet sind und in einer gleitenden Art und Weise mit der Horizontalführung (16) gekoppelt sind;
- Bewegungsmittel (30) zum Bewegen der Aufnahmevorrichtungen (26) entlang der horizontalen Führung (16) zwischen einer zusammengefahrenen Konfiguration und einer auseinandergefahrenen Konfiguration, in der die Aufnahmevorrichtungen (26) mit unterschiedlichen Abständen zueinander positioniert sind;
wobei die Bewegungsmittel (30) folgendes aufweisen:
o für jede Aufnahmevorrichtung eine in jeweilige Nocken (31) und ein jeweiliges Folgeelement (32); wobei die Nocken (31) durch die Tragstruktur (10) gehalten sind und die Folgeelemente (32) jeweils mit den Aufnahmevorrichtungen (26) gekoppelt sind;
o wenigstens einen Betätiger zum Verschieben der Nocken;
- eine Welle oder Trommel (37), welche die Nocken (31) hält, die sich entlang einer Achse (35) parallel zu der horizontalen Führung (16) erstreckt und die durch den Betätiger (38) aktiviert wird, um sich um die Achse (35) zu drehen; und
- Befestigungsmittel (42, 43), welche die Welle oder Trommel (37) mit der Tragstruktur (10) in einer abnehmbaren Art und Weise verbinden;
**dadurch gekennzeichnet, dass** die Befestigungsmittel (42, 43) zwei Tragkörper (44, 58) aufweisen, die in einer drehbaren Art und Weise um die Achse (35) mit der Tragstruktur (10) gekoppelt sind; wobei die Axialenden (40, 41) der Welle oder Trommel (37) an den Tragkörpern (44, 58) in einer abnehmbaren Art und Weise fixiert sind.

2. Aufnahmekopf nach Anspruch 1, **dadurch gekennzeichnet, dass** die Welle oder Trommel (37) abnehmbar und einpassbar bezüglich der Tragkörper (44, 58) ist, und zwar in einer Richtung orthogonal zu der Achse (35).

3. Aufnahmekopf nach Anspruch 2, **dadurch gekennzeichnet, dass** die Befestigungsmittel (42, 43) zwei Halteelemente (53, 65) aufweisen, die axial zwischen zwei Positionen bewegbar sind zum Blockieren bzw. Freigeben der axialen Enden (40, 41).

4. Aufnahmekopf nach Anspruch 3, **dadurch gekennzeichnet, dass** eines der Halteelemente (53) durch einen Stift definiert wird, der axial gleitbar ist in einem Axialloch (54), das entweder in dem Tragkörper oder dem Ende der Welle oder Trommel (37) ausgebildet ist.

5. Aufnahmekopf nach Anspruch 3, **dadurch gekennzeichnet, dass** eines der Halteelemente (65) durch eine externe Hülse definiert wird, die entweder durch den Tragkörper oder das Ende der Trommel gehalten wird.

6. Aufnahmekopf nach einem der vorhergehenden Ansprüche, **dadurch gekennzeichnet, dass** die Tragstruktur (10) eine Seitenöffnung (19) aufweist zum Entfernen/Einsetzen der Aufnahmevorrichtungen (26) von bzw. auf die Führung (16).

7. Aufnahmekopf nach Anspruch 6, **dadurch gekennzeichnet, dass** die Tragstruktur (10) einen ersten und einen zweiten vertikalen Flansch (13, 14) aufweist, die an entgegengesetzten axialen Seiten der Welle oder Trommel (37) angeordnet sind, wobei der erste Flansch (13) mit dem Bewegungseingang des Betätigers (38) assoziiert ist und der zweite Flansch (14) die Seitenöffnung (19) definiert.

8. Aufnahmekopf nach Anspruch 7, **dadurch gekennzeichnet, dass** die Befestigungsmittel (42, 43) eine Befestigungsvorrichtung (43) aufweist, die mit dem zweiten Flansch (14) verbunden ist und die eine äußere radiale Abmessung besitzt, die kleiner ist als der radiale Abstand des Folgeelements (32) von der Achse (35).

9. Aufnahmekopf nach einem der vorhergehenden Ansprüche, **dadurch gekennzeichnet, dass** die Aufnahmevorrichtungen (26) mit den Folgeelementen (32) durch jeweilige vertikale Stangen (23) verbunden sind, die vor den Nocken (31) angeordnet sind; wobei die Folgeelemente (32) definiert werden durch Leerlaufrollen, die sich um jeweilige vertikale Achsen drehen und die überhängend an dem Boden durch jeweilige Platten (33) gehalten werden, welche oberhalb der Nocken (31) angeordnet sind und welche bezüglich zu jeweiligen Stangen (23) fixiert sind.

## Revendications

1. Tête de préhension (1) comprenant :
- une structure de support (10) ;
- un guide horizontal (16) maintenu dans une position fixe par ladite structure de support (10) ;
- une pluralité de dispositifs de préhension (26) utilisables pour saisir et libérer des produits (4) respectifs, agencés côte à côte et couplés de façon coulissante audit guide horizontal (16) ;
- un moyen de déplacement (30) permettant de déplacer lesdits dispositifs de préhension (26) le long dudit guide horizontal (16) entre une configuration compactée et une configuration déployée, dans lesquelles lesdits dispositifs de préhension (26) sont positionnés à différents pas ; ledit moyen de déplacement (30) comprenant :
o pour chaque dispositif de préhension, une came (31) respective et un élément suiveur (32) respectif ; les cames (31) étant maintenues par ladite structure de support (10), et les éléments suiveurs (32) étant couplés respectivement auxdits dispositifs de préhension (26) ;
o au moins un actionneur permettant de déplacer les cames ;
- un arbre ou un tambour (37), qui maintient lesdites cames (31), s'étend le long d'un axe (35) parallèle audit guide horizontal (16), et est activé par ledit actionneur (38) afin de tourner autour dudit axe (35) ; et
- un moyen de fixation (42, 43) qui raccorde ledit arbre ou tambour (37) à ladite structure de support (10) de façon détachable ;
**caractérisée en ce que** ledit moyen de fixation (42, 43) comprend deux corps de support (44, 58), qui sont couplés de façon rotative à ladite structure de support (10) autour dudit axe (35) ; les extrémités axiales (40, 41) dudit arbre ou tambour (37) étant fixées auxdits corps de support (44, 58) de façon détachable.

2. Tête de préhension selon la revendication 1, **caractérisée en ce que** ledit arbre ou tambour (37) est détachable et ajustable par rapport auxdits corps de support (44, 58) dans une direction orthogonale audit axe (35).

3. Tête de préhension selon la revendication 2, **caractérisée en ce que** ledit moyen de fixation (42, 43) comprend deux éléments de retenue (53, 65), qui sont déplaçables axialement entre deux positions afin de bloquer et, respectivement, libérer lesdites extrémités axiales (40, 41).

4. Tête de préhension selon la revendication 3, **caractérisée en ce que** l'un desdits éléments de retenue (53) est défini par une goupille, qui est axialement coulissante dans un trou axial (54) fait dans l'un du corps de support et de l'extrémité dudit arbre ou tambour (37).

5. Tête de préhension selon la revendication 3, **caractérisée en ce que** l'un desdits éléments de retenue (65) est défini par un manchon externe, maintenu par l'un du corps de support et de l'extrémité dudit tambour.

6. Tête de préhension selon l'une quelconque des revendications précédentes, **caractérisée en ce que** ladite structure de support (10) comporte une ouverture latérale (19) permettant de retirer/insérer lesdits dispositifs de préhension (26) sur ledit guide (16).

7. Tête de préhension selon la revendication 6, **caractérisée en ce que** ladite structure de support (10) comprend une première et une seconde bride verticale (13 ; 14) agencées sur des côtés axiaux opposés dudit arbre ou tambour (37) ; la première bride (13) étant associée à l'entrée de déplacement dudit actionneur (38), et la seconde bride (14) définissant ladite ouverture latérale (19).

8. Tête de préhension selon la revendication 7, **caractérisée en ce que** ledit moyen de fixation (42, 43) comprend un dispositif de fixation (43) raccordé à ladite seconde bride (14) et ayant une dimension radiale externe plus petite que la distance radiale desdits éléments suiveurs (32) depuis ledit axe (35).

9. Tête de préhension selon l'une quelconque des revendications précédentes, **caractérisée en ce que** lesdits dispositifs de préhension (26) sont raccordés aux éléments suiveurs (32) par des tiges verticales (23) respectives situées devant lesdites cames (31) ; lesdits éléments suiveurs (32) étant définis par des galets libres tournant autour d'axes verticaux respectifs et étant maintenus en surplomb au fond par des plaques (33) respectives, qui sont situées au-dessus desdites cames (31) et sont fixées par rapport auxdites tiges (23) respectives.
